(19) Europäisches Patentamt
European Patent Office
Office européen des brevets

(11) **EP 4 428 936 A1**

(12) **EUROPEAN PATENT APPLICATION**

(43) Date of publication:
**11.09.2024 Bulletin 2024/37**

(21) Application number: **23161326.6**

(22) Date of filing: **10.03.2023**

(51) International Patent Classification (IPC):
**H01M 4/04** *(2006.01)*          **H01M 4/38** *(2006.01)*
**H01M 4/587** *(2010.01)*          **H01M 10/0525** *(2010.01)*

(52) Cooperative Patent Classification (CPC):
**H01M 4/0402; H01M 4/0435; H01M 4/0471;**
**H01M 4/0495;** H01M 4/386; H01M 4/587;
H01M 10/0525

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(71) Applicant: **CUSTOMCELLS Holding GmbH**
**25524 Itzehoe (DE)**

(72) Inventors:
• **Otepov, Sultan**
  **72760 Reutlingen (DE)**
• **Müller, Henry**
  **72827 Wannweil (DE)**

(74) Representative: **LKGLOBAL**
**Lorenz & Kopf Patentanwalt**
**Attorney at Law PartG mbB**
**Brienner Straße 11**
**80333 München (DE)**

(54)     **A METHOD OF OBTAINING A METALATED BATTERY ELECTRODE**

(57)     The invention relates to a method (100) of obtaining a metalated battery electrode (400), the method comprising:
providing a layer assembly (300) comprising a battery electrode foil (301) and a first metal layer (302), and obtaining the metalated battery electrode (400) by conditioning the layer assembly (300) while a pressure (P) is applied to the layer assembly (300).

Fig. 2A

**Description**

BACKGROUND

Batteries play a critical role in modern society, powering a wide range of devices from portable electronics to electric vehicles. The increasing demand for portable electronics and electric vehicles has led to a growing need for batteries with higher energy density, longer lifespan, and improved safety. Furthermore, the shift towards renewable energy sources such as solar and wind power has increased the need for energy storage systems, making batteries an essential technology in the transition to a low-carbon economy.

Due to the importance of batteries, there is a high demand to improve the efficiency of battery production, in particular the production of battery electrodes. Battery electrodes are composite materials that store the charge carriers at the the positive and negative terminals in a battery.

In the context of battery technology, pre-metalation of the electrodes (i.e. the anodes or cathodes) has been proposed as a way to compensate for the consumption of metal ions in irreversible reactions during the formation of the solid electrolyte interface layer in the initial cycling. By introducing additional metal of the charge carrier species, the consumption of the solid electrolyte interface may be compensated, leading to improved battery performance.

The production of metalated battery electrodes is a challenging task that requires the use of advanced materials and processes. Recent advances have been made in direct contact metallization processes, which have been demonstrated to be efficient and cost-effective for producing metalated battery electrodes with enhanced capacity and superior electrochemical performance. In this process, metal is deposited directly onto a battery electrode foil.

SUMMARY OF THE DISCLOSURE

The present disclosure relates to a method of obtaining a metalated battery electrode. The method comprises providing a layer assembly comprising a battery electrode foil and a first metal layer. The method also comprises obtaining the metalated battery electrode by conditioning the layer assembly while a pressure is applied to the layer assembly.

The metalated battery electrode may be a type of battery electrode in which a metal layer may be applied to the surface of the battery electrode. The metal (e.g. lithium) reacts with the battery electrode to obtain the metalated electrode. The sum of charge carriers introduced into a battery with metalated anode and cathode may increase the capacity and lifespan of the battery. Of course, the metalated battery electrode may be easily recyclable. For example, the metal ions may be extracted from the electrode material and reused in other batteries.

By layer assembly any kind of layered structure may be meant. In general, the layer assembly may be constructed by layering different materials on top of each other. The layer assembly may be constructed by using various techniques such as calendering, laminating, coating, casting, or pressing. Furthermore, the metal layer may be applied to the surface of the battery electrode foil using a variety of methods, such as sputtering, electroplating, vapor deposition, thermal evaporation, or thermal spraying. Thermal evaporation may be understood as a specific type of a vapor deposition method. The material to be coated may be vapor which condenses on the substrate. In thermal spraying a melt or solid particles may be sputtered with high speed through a flame onto the substrate to be coated, so that they impact as liquid or semi-liquid soft particles and form e.g. a closed layer. The different layers in the assembly may serve different functions such as providing structural support, increasing conductivity, recyclability or improving the electrochemical performance of the battery electrode. The layer assembly may be provided, for example, by pressing the first metal layer on the battery foil.

The foil may be any kind of material sheets or other thin structures like a thin film or a thin layer. The foil may have any thickness and shape. The foil may, for example have a round or a rectangular shape.

The metalated battery electrode may be or may serve as an anode or a cathode of a battery cell.

The battery electrode foil may be a sheet of material that is used as one of the electrodes in a battery. The battery electrode foil may comprise any kind of material that may be suitable as battery electrode. The battery electrode foil may itself comprise a plurality of layers, e.g. a base foil inside and on one or both (outer) sides an electrode coating layer.

For example, the base foil may be made from a conductive metal such as copper or aluminum to serve as a current collector for the electrode. Other examples of materials that may be used in the base foil (i.e. to form the base foil) may include nickel-coated copper foil, aluminum-coated copper foil, stainless steel foil, copper-zinc alloy foil. The material of the base foil may be chosen to guarantee a good electrical conductivity, high thermal stability, and low resistance.

The electrode coating layer may, for example, comprise silicon and/or carbon material, metal oxides or phosphates and/or other conversion or intercalation materials feasible for secondary batteries. For example, the battery electrode foil may comprise a silicon suboxide-carbon ($SiO_x/C$, $1 \leq x \leq 2$) composite. The silicon suboxide-carbon ($SiO_x/C$, $1 \leq x \leq 2$) composite is just one example of a material that may be used. Accordingly, an active material may be applied to one or both sides of the base foil, i.e. to form the electrode coating layer. Exemplary active materials may contain but are not limited to metal oxides (cobalt oxide, lithium cobalt oxide, manganese oxide, NMC, vanadium oxide), phosphates (lithium iron phosphate, LMFP), Prussian blue and/or mixtures thereof on a cathode side (i.e. in case the battery electrode shall serve as cathode), and/or carbon materials (e.g. graphite, hard carbon), silicon-based materials (silicon, silicon oxide, silicon carbide), titanates, sulfur-based compounds (sulfides, sulfur-polymer-gels), and/or mixtures thereof on an anode side.

The metalated battery electrode may serve as an active material for the battery. The metal layer may be a thin layer of metal that may be a source of metal particles to be moved into the active material. In other words, the active material may comprise metals that moved from the thin layer of metal into the battery electrode foil. The active material may be the material that may undergo a reversible electrochemical reaction during the charge and discharge process. In other words, the active material may be the substance that may participate in the electrochemical reactions producing the flow of charge carriers (i.e. ions or electrons) within the battery. The metal layer may comprise all kinds of metals such as Li, Na, K, Mg, Ca. For example, the metal layer may be a lithium layer. The respective metal may be used as the charge carrier in the electrochemical process between the anode and the cathode.

The thickness of the metal layer may be greater than or equal to about 10 nm to less than or equal to about 100 $\mu$m, optionally greater than or equal to about 30 nm to less than or equal to about 50 $\mu$m, and in certain variations, optionally greater than or equal to about 1 $\mu$m to less than or equal to about 10 $\mu$m.

Conditioning of the layer assembly may refer to the process of preparing the layer assembly for use by adjusting its properties and performance. Conditioning of the layer assembly may include a variety of techniques such as heating, cooling, cycling, exposing the layer assembly to an electrical field and/or applying pressure to the layer assembly..

One type of pressure that may be applied to a layer assembly may be compaction pressure, which may be used to compress the materials in the layer assembly and increase their density. This may be done by using a roller press or other mechanical means. The pressure may be applied perpendicular to the surface or plane of the layer assembly. Pressure may improve the electrochemical performance of the battery electrode by increasing the contact area between the electrode microparticles.

The pressure applied to the layer assembly may be a predefined pressure. A predefined pressure may refer to a specific, predetermined amount of pressure that was defined by an operator before the manufacturing process. The pressure may be measurable and controllable during the manufacturing process, i.e. that a specific amount of pressure may be set at any time. The pressure may be applied for a (e.g. predefined) period of time. For example, the pressure may be applied for hours or even days.

In other words, the method of obtaining the metalated battery electrode may be a direct contact metalation process, i.e. the thin layer of metal has direct contact with the surface of the battery electrode foil to metalate the active material. By metalation any movement of metal particles, such as atoms, into the battery electrode foil may be meant. The electrode material may be a solid material. The metal may be or may comprise any metal feasible for reversible cycling in a secondary battery cell/ the active component going from the anode to the cathode during discharge, typically lithium, lithium alloy or a compound or metalorganic compound comprising those metals.

Direct contact metalation may be a process in which a thin layer of metal is deposited onto the surface of the electrode material by means of a chemical or physical process. This process may allow for precise control over the thickness and composition of the metal layer, which may improve the performance of the electrode.

In one aspect, the pressure is at least partially generated by a predefined tensile force applied to the layer assembly, optionally during deflecting the layer assembly by a pulley. Accordingly, the layer assembly, to which the predefined tensile force is applied, may receive a (accordingly predefined) pressure due to the deflection. Therefore, by controlling the tensile force (which may thus be predefined) the amount of pressure may be precisely controlled. In one example, the deflection may be realized by rolling up the layer assembly as described below.

Tensile force may be understood as e.g. a type of force that occurs when the layer assembly is pulled apart. Tensile force may be the force that may be required to stretch or elongate the layer assembly. The magnitude of tensile force applied to the layer assembly may determine its ability to withstand stretching or deformation without breaking. Tensile force may also be called web tension. The amount of tensile force may be chosen such that the layer assembly can withstand the tensile force without deforming the layer assembly plastically (i.e. irreversibly, e.g. such that the layer assembly cannot get back to its original form).

The term "predefined" may be used to describe a parameter, such as pressure or tensile force, that has already been set up or defined before it is used or applied. "Predefined" may refer to a set of instructions, values, or settings that may have already been established and are ready to be used. Another term for "predefined" may be "predetermined".

The predefined tensile force may be chosen to ensure that the layer assembly is wound up tightly and uniformly, which may improve the performance and stability of the electrode.

In one aspect, conditioning the layer assembly may be performed for a predetermined conditioning time.

Conditioning time may be the time span of conditioning the layer assembly. Conditioning time may be the period of time from the making of the layer assembly to the use of the layer assembly. During the conditioning time, the layer assembly may go through a number of processes to ensure it may meet quality standards and may be in optimal condition for use. The conditioning time may start, for example, when a pressure is applied to the layer assembly. The conditioning time may stop when the pressure is released. In another example, the conditioning time may start when the layer assembly may be placed in a storage space and the conditioning time may stop when the layer assembly is taken out from the storage space.

The pressure applied to the layer assembly may have an influence on the conditioning time. For example, a higher pressure may require a shorter conditioning time. In another example, a lower pressure may require a longer conditioning time.

In one aspect, the pressure may be at least partially generated by winding up the layer assembly on a coil, optionally in combination with applying a predefined tensile force to the layer assembly.

When the layer assembly is, for example, wound on a coil (or roll), the layers may be compressed. The compression of the layers may create a pressure between them, which may be transmitted through the entire assembly. As the layer assembly may be wound up on a coil, each successive layer is pressed against the previous and following layers, creating a force that pushes the layers together. As the layers may be wound tighter, the pressure may increase, creating a higher pressure in the entire assembly. The resulting pressure may be defined as a radial pressure in case of winding up the layer assembly. This may mean that effectively the pressure is directed radially inward towards the axis of the coil and the layer assembly is wound under application of a web tension.

The magnitude of the pressure may be controlled by the applied tensile force. For example, when winding up the layer assembly on a coil, the applied tensile force may be controlled as a function of the number of coil turns (or number or amount of revolutions of the coil), e.g. such that the pressure remains similar across the complete wound layer assembly. The tensile force may e.g. increase as a function of an increasing number of coil turns (or number of revolutions of the coil).

One advantage of winding up the layer assembly on a coil may be that the layers form a strong bond. Another advantage may be that the coil winding process is faster and more efficient than traditional manufacturing methods, resulting in a lower cost of production.

In one aspect, the layer assembly may comprise a first protection foil, which is arranged on a side of the first metal layer facing away from the battery electrode foil. The protection foil may also be referred to as a protective film.

The protection foil may be the outermost layer of the layer assembly. The protection foil may be used to protect the layer assembly during manufacturing, transportation or storage. The protection foil may have a range of properties, depending on the type of application. For example, the protection foil may be designed for UV protection, heat resistance, abrasion resistance, chemical resistance and/or water resistance.

For example, the protection foil may be air-tight. In other words, the protective foil may be used to create an air-tight seal around the layer assembly. One advantage of an air-tight protection foil may be an efficient metalation because it prevents oxygen and other gases from entering. Oxygen may react with the metals present in the layer assembly and reduce the efficiency of the metalation process. By creating an air-tight seal, the oxygen may be kept out to prevent corrosion.

The protection foil may be used not only to protect the battery electrode foil from external factors but also to support the metal layer. In this option, the metal layer, such as lithium, sodium, potassium, magnesium, or calcium, may be deposited or applied onto the protection foil, which acts as a carrier for it. The metal layer may be then adhered to the battery electrode foil, creating a sandwich-like structure with the metal layer in between the electrode and the protection foil. This structure may help to improve the conductivity and stability of the electrode. Metal layers, such as copper or aluminum, may be strong enough to support themselves at low thickness (e.g. thickness of 10 $\mu$m).

Furthermore, the protection foil may help when winding the layer assembly by providing a barrier between the layers. This barrier may help to prevent the layers from sticking together when they may be rolled up, and it may also help to further protect the layers from any potential contamination, e.g. by any dust particles and moisture. The protection foil may also help to reduce friction between the layers, which makes it easier to roll up the layer assembly.

In one aspect, the method may further comprise removing the first protection foil, optionally before or after conditioning the layer assembly.

Different techniques may be used to remove the protection foil. For example, the protection foil may be peeled or pulled off. Furthermore, e.g. a cleaning solution may be used to loosen the protection foil.

The first protection foil may be removed before conditioning the layer assembly to prevent coating problems. In other words, the protection foil may be replaced by a clean and/or pristine protection foil.

In one aspect, in case the first protection foil is removed before conditioning, a separation layer may be arranged on the layer assembly before conditioning.

The separation layer may be arranged on the top of the layer assembly. Furthermore, separation layer may be arranged on the bottom of the layer assembly. The separation layer may have the same protective properties as the protection foil. Furthermore, the separation layer may have properties that ensure optimal separation between the layers in the wound-up layer assembly. The separation layer may play a crucial role in maintaining the integrity and uniformity of the wound layers, preventing them from sticking together or becoming entangled. The separation layer may help to preserve the cleanliness, neatness, and uniformity of the wound layer assembly, ensuring that it can be easily unwound and used as intended. Overall, the separation layer may add value to the wound layer assembly by improving its functionality and making it more user-friendly.

In one aspect, conditioning the layer assembly may comprise a heat treatment.

Heat treatment may comprise, in several steps, heating the layer assembly to one or more certain temperatures at a specific heating rate for a specific duration and cooling the layer assembly at a specified rate. The heat treatment may help to improve the metalation process in the layer assembly. Heat treatment may also help to improve the mechanical properties of the layer assembly, making it more resistant to wear and tear.

In one aspect, the method may further comprise dividing the metalated battery electrode into electrode elements.

Dividing the metalated battery electrode into electrode elements may be performed by various methods, such as laser cutting, die cutting, punching or notching.

Dividing the metalated battery electrode may be performed in particular after conditioning the layer assembly and/or after removing the protection foil. However, separation (i.e. dividing the battery electrode) may be done before or after conditioning and/or before or after removing the protective foil.

In one aspect, the method may comprise providing the layer assembly with a second metal layer. Furthermore, the first metal layer may be arranged on a first side of the battery electrode foil and the second metal layer may be arranged on a second side of the battery electrode foil.

In other words, a double side coated battery electrode may be provided. The first metal layer and the second metal layer may have the same structure, thickness and dimensions. Furthermore, the first metal layer and the second metal layer may comprise the same material. Both sides of the battery electrode foil may be completely covered. By covering both sides of the battery electrode foil with a metal layer, a double side coated battery electrode foil may be obtained.

In one aspect, the layer assembly may comprise a second protection foil, which may be arranged on a side of the second metal layer facing away from the electrode foil.

While the first protection foil may be arranged on the top of the layer assembly, the second metal layer may be arranged on the bottom. Both sides of the layer assembly may be completely covered with protection foils.

The present disclosure also relates to a method of obtaining a battery cell comprising a method of obtaining a metalated battery electrode as described above.

The present disclosure also relates to a layer assembly comprising an at least partially metalated battery electrode foil and optionally a first metal layer, wherein the layer assembly is wound up on a coil under a predefined tensile force.

In one aspect, a metalated battery electrode may be obtained by unwinding (i.e. unrolling) and optionally dividing the layer assembly according to any examples of the present disclosure or by a method according to any examples of the present disclosure.

After unrolling, the metalated battery electrode may be flattened by a flat surface or a smoothing roller. Furthermore, after unrolling, the metalated battery electrode may be ready to be processed into a battery. For example, the metalated battery electrode may be further processed by winding, laminating, Z-folding or stacking in combination with materials such as a separator material and a counter electrode.

The present disclosure also relates to a battery cell, comprising a metalated battery electrode as described above.

The technology provided by the present disclosure may be applied in various types of batteries such as lithium-ion and lithium-sulfur batteries. Other examples of batteries may be sodium-ion batteries, magnesium-ion batteries aluminum-ion batteries, alkaline batteries, lead acid batteries, nickel-cadmium batteries, nickel-metal hydride batteries, silver oxide batteries, zinc-air batteries, zinc-carbon batteries.

Some or all steps of this process may be conducted in an environment that is protected, such as a chamber filled with inert gas. It is also possible that some or all steps may be conducted in a housing.

Generally, the main advantage of premetalation is that a higher energy density and improved first cycle efficiency can be achieved. In addition, the methods described herein may offer a number of advantages that make it an appealing option for producing high-energy battery electrodes. Firstly, the methods may effectively inhibit or at least reduce large volume changes, ensuring consistent and reliable performance of the battery. Secondly, the methods may result in a homogeneous electrode surface with a lower surface roughness compared to traditional methods, which contributes to improved performance and longer lifespan of the battery. Additionally, the continuous reaction of lithium with the battery electrode foil may create a more homogeneous distribution of reaction products, leading to better battery efficiency. The methods may also lock out the atmosphere from reacting with the active materials by keeping the protection foil during the conditioning/alloying process, thereby further improving the stability and reliability of the battery. Lastly, the methods may comprise a fast and scalable roll-to-roll process, making it a cost-effective and practical solution for large-scale production of high-quality battery electrodes.

It is intended that combinations of the above-described elements and those within the specification may be made, except where otherwise contradictory.

It is to be understood that both the foregoing general description and the following detailed description are exemplary and explanatory only, are provided for illustration purposes and are not restrictive of the disclosure, as claimed.

The accompanying drawings, which are incorporated in and constitute a part of this specification, illustrate examples of the disclosure and together with the description, and serve to support and illustrate the principles thereof.

BRIEF DESCRIPTION OF THE DRAWINGS

Fig. 1a and 1b show a flowchart of a method 100 of obtaining a metalated battery electrode according to examples of the present disclosure.

Fig. 2A schematically shows a method 100 of obtaining the metalated battery electrode 400 with a manufacturing system 200 according to examples of the present disclosure.

Fig. 2B shows an alternative embodiment of manufacturing system 200 shown in Fig. 2A.

Fig. 3A shows a schematic drawing of the battery electrode foil 301 according to examples of the present disclosure.

Fig. 3B shows a schematic drawing of the layer assembly 300 comprising the battery electrode foil 301 of Fig. 3A, the first metal layer 302 and the first protection foil 303 according to examples of the present disclosure.

Fig. 3C shows the layer assembly 300 comprising the battery electrode foil 301 of Fig. 3A and the first metal layer 302 according to examples of the present disclosure.

Fig. 4A shows a schematic drawing of the layer assembly 300 comprising the battery electrode foil 301, the first metal layer 302, the first protection foil 303, the second metal layer 304, and the second protection foil 305 according to examples of the present disclosure.

Fig. 4B shows a schematic drawing of the layer assembly 300 comprising the battery electrode foil 301, the first metal layer 302, and the second metal layer 304 according to examples of the present disclosure.

Fig. 5A shows the layer assembly 300 wound up on a coil 230 according to examples of the present disclosure.

Fig. 5B show the layer assembly 300 of Fig. 5A in another perspective.

Fig. 5C shows the relation of web tension and number of output coil turns.

Fig. 6 shows a schematic drawing of a system 600 of winding up the layer assembly 300 on the coil 230 according to examples of the present disclosure.

Fig. 7 shows the differences between pre-lithiation (or other metallization) with and without the protective foil 305 and an applied pressure.

DESCRIPTION OF THE DRAWINGS

Reference will now be made in detail to examples of the disclosure, examples of which are illustrated in the accompanying drawings. Wherever possible, the same reference numbers will be used throughout the drawings to refer to the same or like parts.

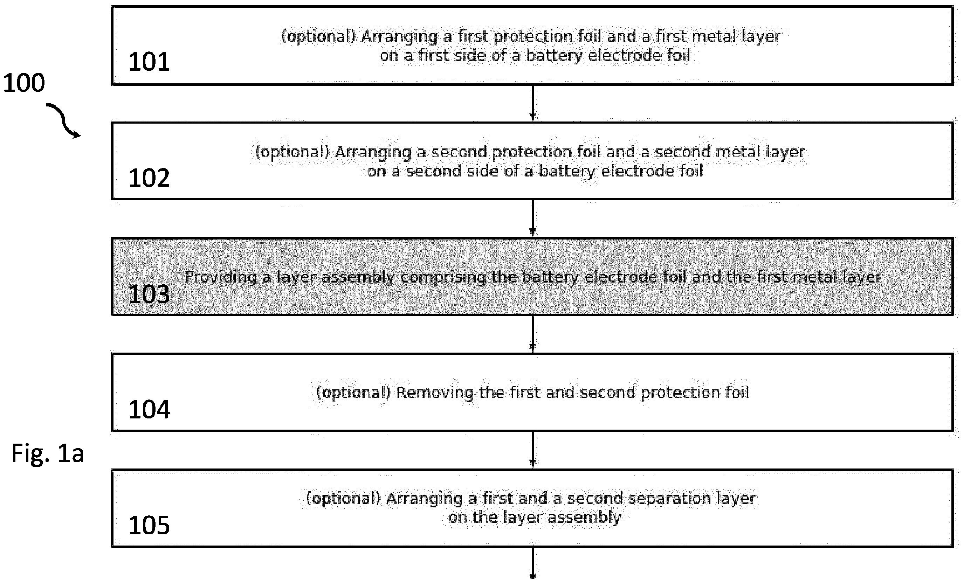

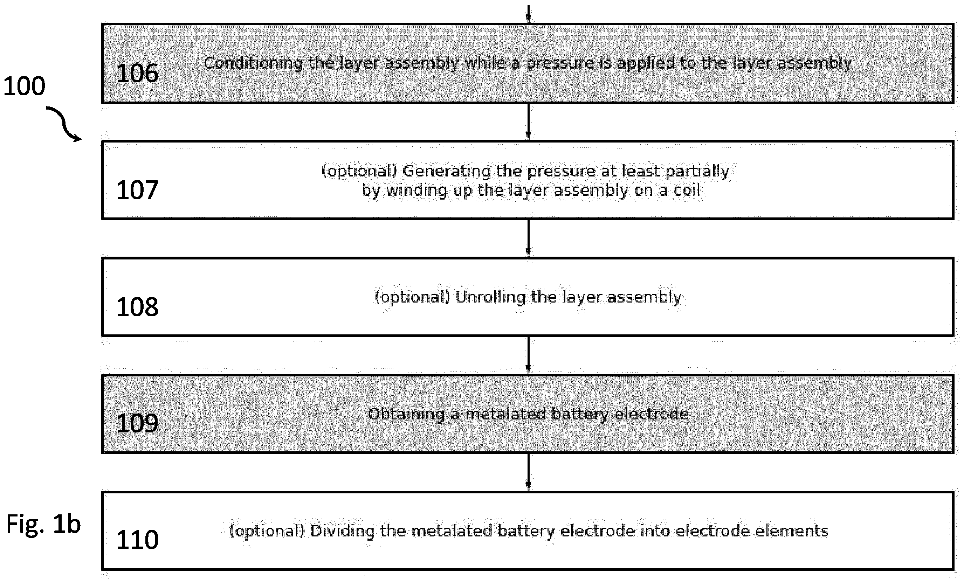

Fig. 1a and 1b show a flowchart of a method 100 of obtaining a metalated battery electrode according to examples of the present disclosure. In an optional first step 101 (cf. fig. 1a), a first protection foil and a first metal layer is arranged on a first side of a battery electrode.

The first metal layer is a lithium layer with a thickness of about 5 $\mu$m. The first metal layer is arranged on a first side of a battery by calendaring.

The first protection foil is arranged on a side of the first metal layer facing away from the battery electrode foil. The first protection foil is the outermost layer. The protection foil is a thin plastic layer that is used to protect the electrode from external factors such as moisture, oxygen, and other contaminants. This additional layer of protection helps to extend the lifespan of the electrode by preventing corrosion and degradation of the electrode materials.

In an optional second step 102, a second protection foil and a second metal layer is arranged on a second side of a battery electrode foil.

The optional second step 102 is analogous to the first optional step 101. That means that the first metal foil is a lithium layer with a thickness of about 5 $\mu$m arranged on a first side of a battery by laminating. The second protection foil is arranged on a side of the second metal layer facing away from the battery electrode foil.

In a third step 103, a layer assembly is provided, wherein the layer assembly comprises the battery electrode foil and the first metal layer. In other words, the first metal layer is deposited onto the surface of the battery electrode foil to achieve a direct contact between the metal and the battery electrode foil.

In an optional forth step 104, the first and/or second protection foil is removed. A cleaning solution may optionally be used to loosen the first and the second protection foil. The first and the second protection foil is then pulled off.

In an optional fifth step 105, a first and/or a second separation layer is arranged on the layer assembly. The first separation layer is arranged on a side of the first metal layer facing away from the battery electrode foil. The second separation layer is arranged on a side of the second metal layer facing away from the battery electrode foil. In other words, the first and second protection foil are replaced by the first and the second separation layer.

In a sixth step 106 (cf. fig. 1b), the layer assembly is conditioned while a pressure is applied to the layer assembly. This is done by using a press roller. Conditioning increases the density and conductivity of the layer assembly.

An optional seventh step 107 comprises generating the pressure at least partially by winding up the layer assembly on a coil. In this step, the layer assembly, which comprises the battery electrode foil, the first and second metal layer, and the first and a second separation layer, is wound up on a coil under a predefined tensile force. The tensile force is a measure of the pulling force applied to the layer assembly when it is wound up on the coil. The predefined tensile force is chosen to ensure that the layer assembly is wound up tightly and uniformly. The tensile force generated by winding up the layer assembly on a coil can be used to apply pressure to the layer assembly. The amount of pressure applied is predefined based on the materials and the desired properties of the layer assembly.

In an optional eighth step 108, the layer assembly is unrolled. In this step, the layer assembly is unrolled from the coil and flattened by a smoothing roller. This step is performed after the conditioning has been finished and the metalation of the battery electrode foil has been achieved.

A ninth step 109 comprises obtaining a metalated battery electrode. The metalated battery electrode comprises the electrode foil that has been partially or fully metalated.

In an optional tenth step 110, the metalated battery electrode is divided into electrode elements. In this step, the metalated battery electrode is cut into electrode elements and stacked for further processing. The metalated battery electrode is now ready to be processed into a battery.

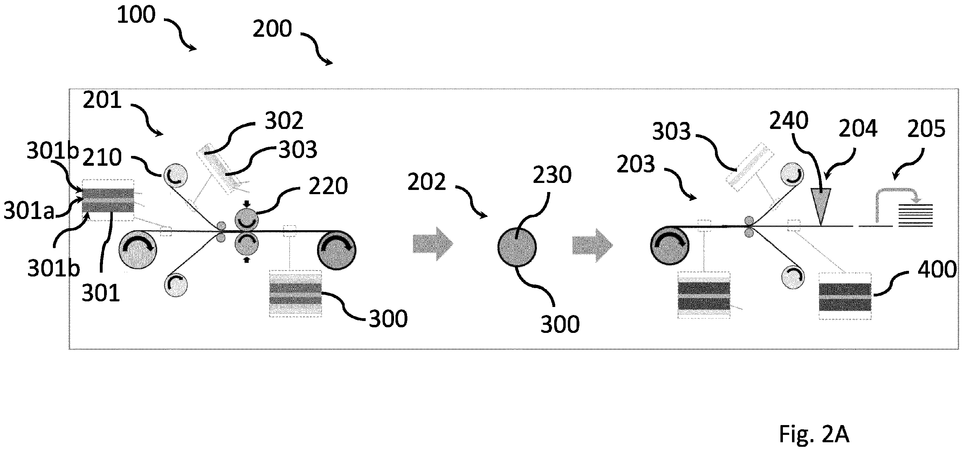

Fig. 2A shows a method 100 of obtaining the metalated battery electrode 400 with a manufacturing system 200 according to examples of the present disclosure.

In a first step 201, the layer assembly 300 is obtained by laminating (e.g. calendaring) the battery electrode foil 301 with a first metal layer 302, which is a lithium film. The layer assembly 300 is obtained by arranging the first metal layer 302 and the first protection foil 303 (e.g. made of PET) on the battery electrode foil 301. This is achieved by unrolling the first metal layer 302 and the first protection foil 303 from an upper coil 210 and arranging the first metal layer 302 and the first protection foil 303 on the battery electrode foil 301. The layer assembly 300 is then pressed together by two rollers 220.

The battery electrode foil 301 may itself comprise or consist of a plurality of layers, e.g. a base foil 301a (i.e. a current collector, e.g. made of copper) inside, and on one or both (outer) sides an electrode coating layer 301b. The electrode coating layer 301b may comprise an active material and a binder material.

In a second step 202, the layer assembly 300 is conditioned. Conditioning comprises generating a pressure by winding up the layer assembly 300 on a coil 230. Conditioning is performed for a time period of 68 hours.

In a third step 203, the metalated battery electrode 400 is obtained by removing the first protection foil 303 from the layer assembly 300. After the conditioning, there is no metallic lithium left on the surface of the first protection foil 303. The first protection foil 303 is easily removed from the metalated battery electrode 400. The surface of the metalated battery electrode 400 desirably looks of homogenous color. Surface roughness and homogeneity may be confirmed to be in the range of pristine electrode material using a microscope and focus stacking techniques.

Afterwards a cutting process 204 is performed. The metalated battery electrode 400 is cut into electrode elements by a cutting device 240, which is a laser cutter. The electrode elements are collected by stacking 205.

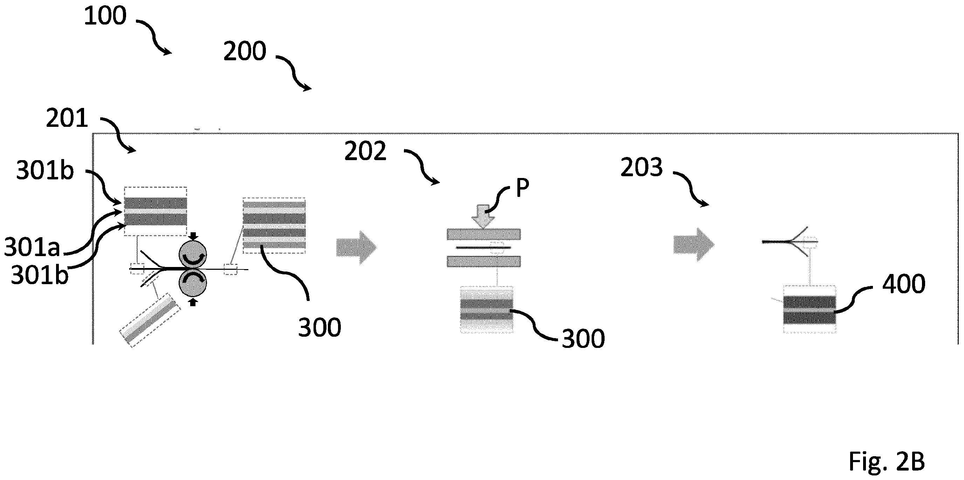

Fig. 2B shows an alternative embodiment of manufacturing system 200 shown in Fig. 2A. Similar to the manufacturing system 200 in Fig. 2A, the method 100 comprises a first step 201 of providing layer assembly 300, a second step 202 of conditioning the layer assembly 300 and a third step 203 of removing the first protection foil 303. Here, the conditioning is achieved by placing the layer assembly 300 between two metal plates and press them together by a force of e.g. 40 N (i.e. corresponding to a weight of 4 kg). The layer assembly is conditioned at room temperature for 68 hours.

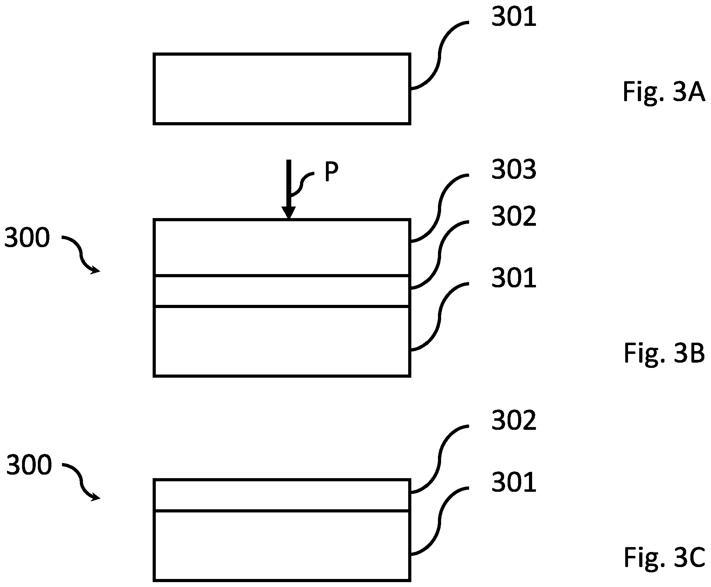

Fig. 3A shows a schematic drawing of the battery electrode foil 301 according to examples of the present disclosure. The battery electrode foil 301 has a thickness of 50 $\mu$m.

Fig. 3B shows a schematic drawing of the layer assembly 300 comprising the battery electrode foil 301 of Fig. 3A, the first metal layer 302 and the first protection foil 303 according to examples of the present disclosure. The first metal layer 302 is first deposited or applied onto the first protection foil 303, which acts as a carrier for the first metal layer 302. The first metal layer 302 is then adhered to the battery electrode foil 301, creating a sandwich-like structure with the first metal layer 302 in between the battery electrode foil 301 and the first protection foil 303.

The pressure p is applied to the surface of the layer assembly 300. The pressure P is applied perpendicular to the surface or plane of the layer assembly 300. The pressure P applied to the surface is maintained for a duration ranging from 68 hours to 4 hours. The pressure P is applied to a surface measuring 12x18 cm resulting in a force within the range of 40 to 30,000 N. The pressure P may serve as a conditioning treatment for the material.

Fig. 3C shows the layer assembly 300 comprising the battery electrode foil 301 of Fig. 3A and the first metal layer 302 according to examples of the present disclosure. The first protection foil 303, which served as carrier for the first metal layer 302, has been removed from the first metal layer 302..

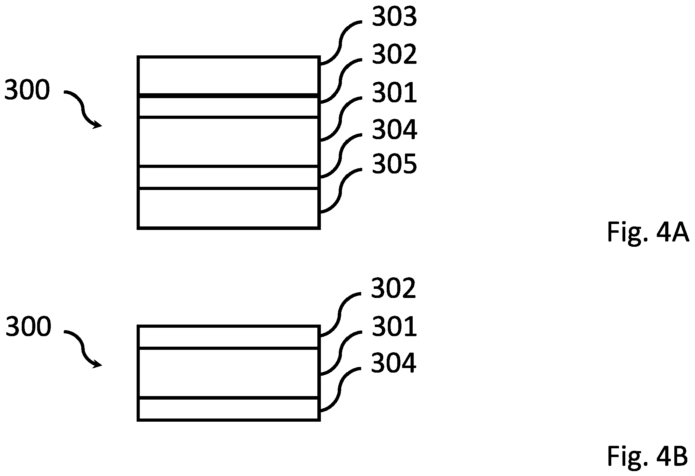

Fig. 4A shows a schematic drawing of the layer assembly 300 comprising the battery electrode foil 301, the first metal layer 302, the first protection foil 303, the second metal layer 304, and the second protection foil 305 according to examples of the present disclosure. The battery electrode foil 300 has a first side on top and a second side on the bottom. Other than the layer assembly 300 in Fig. 3B, the layer assembly 300 in Fig. 4A is covered from both sides with a metal layer. The first metal layer 302 and the second metal layer 304 have the same thickness and shape. Furthermore, the first metal layer 302 and the second metal layer 304 comprise the same materials.

Fig. 4B shows a schematic drawing of the layer assembly 300 comprising the battery electrode foil 301, the first metal layer 302, and the second metal layer 304 according to examples of the present disclosure. The first protection foil 303 and the second protection foil 305 have been removed of the layer assembly 300 shown in Fig. 4A.

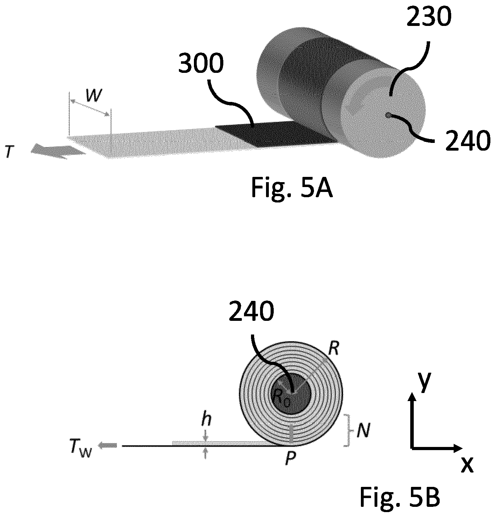

Fig. 5A shows the layer assembly 300 wound up on a coil 230 according to examples of the present disclosure. In this example the layer assembly 300 may be a web with a web width W. A predefined tensile force T is applied to the layer assembly 300. The predefined tensile force T is used to apply the pressure to the layer assembly 300 in the coil 230.

Fig. 5B show the layer assembly 300 of Fig. 5A in another perspective. The predefined tensile force T causes a pressure P on the layer assembly 300. The layer assembly 300, which is in form of a web, may have a thickness h. The thickness of web h may be the sum of all layers (e.g. protective film + Li + electrode + Li + PET).

Following equations may be applied:

$$T_W = T/W$$

$$T_W = P*R$$

$$R = R0 + h*N$$

$$L = \pi*N*(R+R0)$$

Where T is the predefined tensile force that is applied to the layer assembly 300 in the coil 230, Tw is the ratio of the applied tensile force T to the web with width W of the layer assembly 300, P is the pressure applied to the coil 230, R is the radius of the coil 230, R0 is the radius of the core, h is the thickness of the web, N is the number of layers in the coil 230, and L is the length of the web 300. Tw may also be called line tension or web tension, which is perpendicular to the width and parallel to the winding direction of the layer assembly 300.

These equations are used to calculate the conditions applied to the coil 230 under different parameters, such as applied tensile force T and number of layers N.

The equations help to understand the behavior of the coil 230 and the pressure P on the layer assembly 300.

When the layer assembly 300 is wound on the coil 230, the layers of the layer assembly 300 are compressed. The predefined tensile force T and the compression of the layers create the pressure P between the layers, which may be transmitted through the entire layer assembly 300. As the layer assembly 300 is wound, each successive layer is pressed against the previous layers, creating the pressure P that pushes the layers together. As the layers may be wound tighter, the pressure P may increase, creating a higher pressure P in the entire layer assembly. The pressure P is a radial pressure. This means that the pressure P is directed inward to the axis of the coil 230.

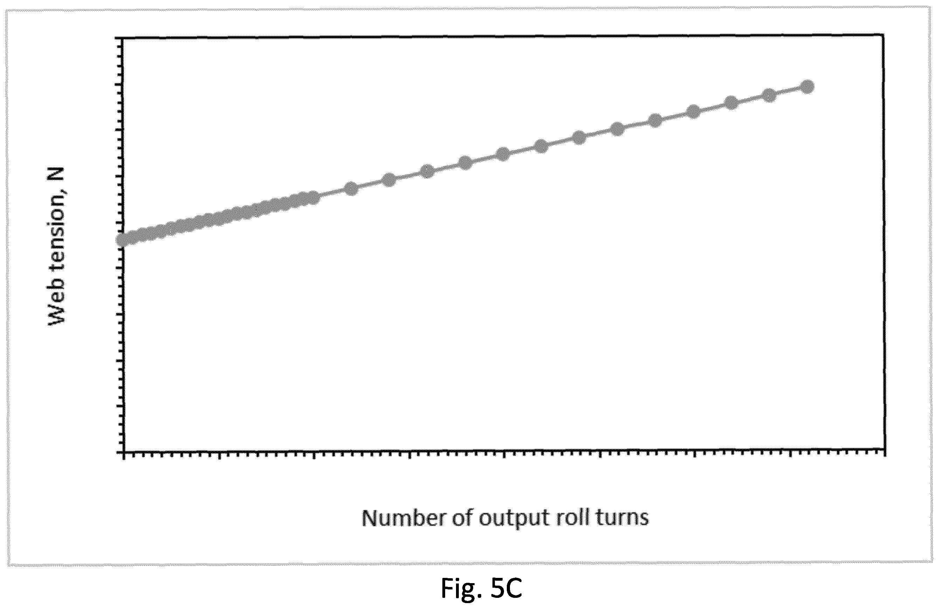

Fig. 5C shows the relation of web tension (i.e. a tensile force applied to the layer assembly) and number of output coil turns. Output coil turns represent the number of windings of the layer assembly, where the layers are neatly and tightly wound onto the coil. The higher the number of output coil turns, the higher the web tension is desirably set to guarantee an evenly distributed pressure P in the entire layer assembly. The relation between web tension and number of output coil turns may be linear.

In case of one output coil turn, the web tension is set at a certain level to ensure that pressure P is evenly distributed across the entire layer assembly. As the number of output coil turns increases, the web tension must also be increased to maintain the same level of even pressure distribution. This is because a larger number of output coil turns means that the web is being wound less tightly, leading to a higher tension required to keep the pressure evenly distributed.

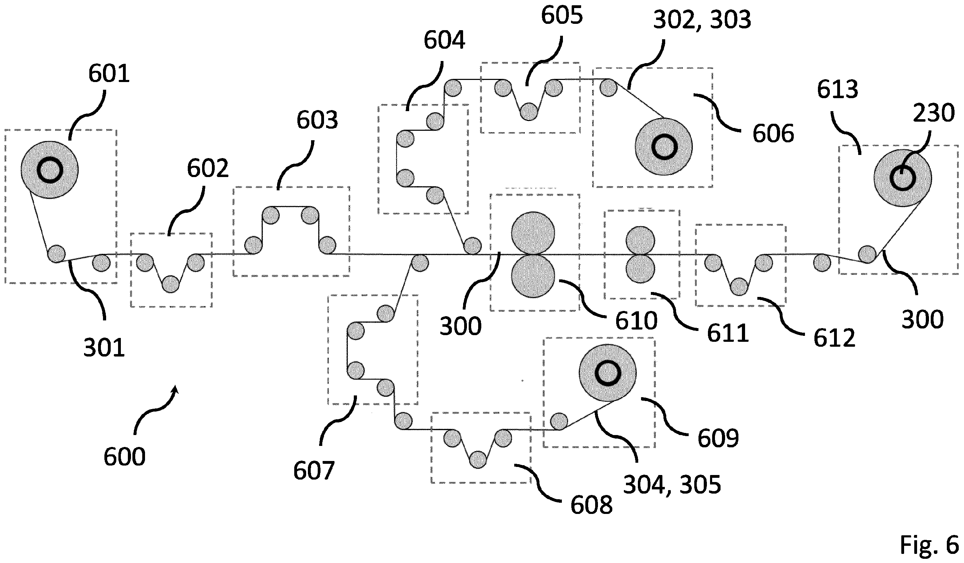

Fig. 6 shows a schematic drawing of a system 600 of winding the layer assembly 300 on the coil 230 according to examples of the present disclosure.

The system 600 comprises an electrode coil unwinder 601, an anode tensioner 602, an anode web guider 603, a top Li-polymer film (e.g. PET or other platic) web guider 604, a top Li- polymer film web tensioner 605, a top Li- polymer film web unwinder 606, a bottom Li-polymer film web guider 607, a bottom Li- polymer film web tensioner 608, a bottom Li- polymer film web unwinder 609, a calender 610, a dragger 611, a tensioner 612 and a rewinder 613.

The battery electrode foil 301 is provided from the anode coil unwinder 601 and runs through the anode tensioner 602 and the anode web guider 603.

The first metal layer 302 and the first protection foil 303 are provided from the top Li-PET web unwinder 606 and run through the top Li-PET web guider 604 and the top Li-PET web tensioner 605. The second metal layer 304 and the second protection foil 305 are provided from the bottom Li-PET web unwinder 609 and run through the bottom Li-PET web guider 607 and the bottom Li-PET web tensioner 608.

First, the second metal layer 304 and the second protection foil 305 are arranged on the bottom side of the battery electrode foil 301. In a further step, the first metal layer 302 and the first protection foil 303 are arranged on the top side of the battery electrode foil 301.

Afterwards, the layer assembly 300 runs through the calender 610, the dragger 611, the tensioner 612 and the rewinder 613. The layer assembly 300 is arranged on the coil 230.

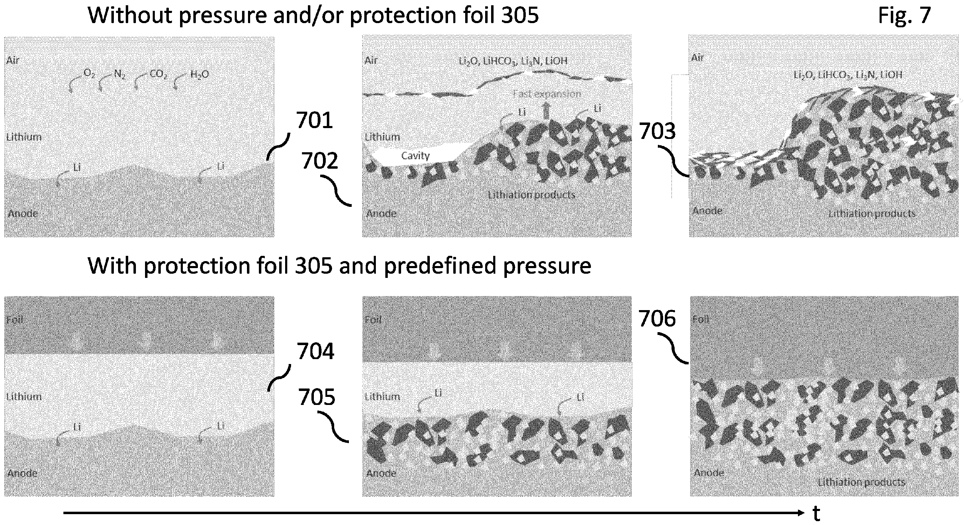

Fig. 7 shows the differences between pre-lithiation (or other metallization) with the protective foil 305 and an applied pressure (i.e. according to the technology of the present disclosure) (cf. the three schematic illustrations 704 to 706 at the bottom of fig. 7) and without a protective foil and/or an applied pressure (cf. the three schematic illustrations 701 to 703 at the top of fig. 7). The schematic illustrations in each of these two scenarios represent the temporal development (cf. the horizontal axis representing the time t).

According to the present disclosure the pressure may be applied on the protective foil 305. The technology of the present disclosure provides several advantages:

Firstly, conditioning the laminated lithium/electrode assemblies without the removal of the foil provides protection of the lithium surface from the reaction with air. The open sides of the coil may be protected by covering (e.g. with caps, parafilm or similar). Lithium (or other used metal) may react with almost all the components of the air giving various unwanted products, such as $Li_2O$, $LiOH$, $Li_3N$, $Li_2CO_3$, $LiHCO_3$.

Secondly, without the protective foil 305, as lithium reacts with $SiO_x$ hollow spaces (i.e. cavities) can form between them, thus slowing the further reaction. In contrast, when using the technology of the present disclosure, applied pressure can ensure that the contact is kept, and the reaction continues evenly.

Thirdly, without the protective foil 305, the reaction of lithium with SiOx is complex and produces various compounds (e.g., $Li_xSi_yO_z$, $Si$, $Li_2O$, $Li_xSi_y$) with different densities. Severe volume changes may occur due to regional discrepancies in the rate of the reaction. In contrast, when using the technology of the present disclosure, applied pressure may inhibit inhomogenious volume changes.

Throughout the description, including the claims, the term "comprising a" should be understood as being synonymous with "comprising at least one" unless otherwise stated. In addition, any range set forth in the description, including the claims should be understood as including its end value(s) unless otherwise stated. Specific values for described elements should be understood to be within accepted manufacturing or industry tolerances known to one of skill in the art, and any use of the terms "substantially" and/or "approximately" and/or "generally" should be understood to mean falling within such accepted tolerances.

Although the present disclosure herein has been described with reference to particular examples, it is to be understood that these examples are merely illustrative of the principles and applications of the present disclosure.

It is intended that the specification and examples be considered as exemplary only, with a true scope of the disclosure being indicated by the following claims.

**Claims**

1. A method (100) of obtaining a metalated battery electrode (400), the method comprising:

   providing a layer assembly (300) comprising a battery electrode foil (301) and a first metal layer (302), and
   obtaining the metalated battery electrode (400) by conditioning the layer assembly (300) while a pressure (P) is applied to the layer assembly (300).

2. The method of claim 1, wherein the pressure (P) is at least partially generated by a predefined tensile force (T) applied to the layer assembly (300), optionally during deflecting the layer assembly (300) by a pulley.

3. The method according to any one of the preceding claims, wherein conditioning the layer assembly (300) is performed for a predetermined conditioning time.

4. The method according to any one of the preceding claims, wherein the pressure (P) is a predefined pressure and/or
   the pressure (P) is at least partially generated by winding up the layer assembly (300) on a coil (230), optionally during applying a predefined tensile force (T) to the layer assembly (300).

5. The method according to any one of the preceding claims, wherein the layer assembly (300) comprises a first protection foil (303), which is arranged on a side of the first metal layer (302) facing away from the battery electrode foil (301).

6. The method of claim 5, further comprising: removing the first protection foil (303), optionally before or after conditioning the layer assembly (300).

7. The method of claim 6, wherein, in case the first protection foil (303) is removed before conditioning, a separation layer is arranged on the layer assembly (300) before conditioning.

8. The method according to any one of the preceding claims, wherein conditioning the layer assembly (300) comprises a heat treatment.

9. The method according to any one of the preceding claims, further comprising:
dividing the metalated battery electrode (400) into electrode elements.

10. The method according to any one of the preceding claims, further comprising:

providing the layer assembly (300) with a second metal layer (304),
wherein the first metal layer (302) is arranged on a first side of the battery electrode foil (301) and the second metal layer (304) is arranged on a second side of the battery electrode foil (301).

11. The method according to the preceding claim, wherein the layer assembly (300) comprises a second protection foil (305), which is arranged on a side of the second metal layer (304) facing away from the electrode foil (301).

12. A method of obtaining a battery cell comprising a method according to any one of the preceding claims.

13. A layer assembly (300) comprising:

an at least partially metalated battery electrode foil and optionally a first metal layer (302),
wherein the layer assembly (300) is wound up on a coil (230) under a predefined tensile force (T).

14. A metalated battery electrode (400) obtained by:

unrolling and optionally dividing the layer assembly (300) according to the preceding claim, or
a method according to any one of the preceding claims.

15. A battery cell, comprising a metalated battery electrode (400) according to the preceding claim.

100

101 (optional) Arranging a first protection foil and a first metal layer on a first side of a battery electrode foil

102 (optional) Arranging a second protection foil and a second metal layer on a second side of a battery electrode foil

103 Providing a layer assembly comprising the battery electrode foil and the first metal layer

104 (optional) Removing the first and second protection foil

105 (optional) Arranging a first and a second separation layer on the layer assembly

Fig. 1a

**100**

| 106 | Conditioning the layer assembly while a pressure is applied to the layer assembly |

| 107 | (optional) Generating the pressure at least partially by winding up the layer assembly on a coil |

| 108 | (optional) Unrolling the layer assembly |

| 109 | Obtaining a metalated battery electrode |

| 110 | (optional) Dividing the metalated battery electrode into electrode elements |

Fig. 1b

100

200

201  302  303  220  240  204  205

301b  210  303  230  203

301a  301b  301

300  202  300  400

Fig. 2A

Fig. 2B

EP 4 428 936 A1

301

Fig. 3A

303

302

P

300

301

Fig. 3B

302

300

301

Fig. 3C

EP 4 428 936 A1

Fig. 4A

Fig. 4B

EP 4 428 936 A1

Fig. 5A

Fig. 5B

Number of output roll turns

Web tension, N

Fig. 5C

Fig. 6

EP 4 428 936 A1

Fig. 7

Without pressure and/or protection foil 305

With protection foil 305 and predefined pressure

Europäisches Patentamt

European Patent Office

Office européen des brevets

# EUROPEAN SEARCH REPORT

Application Number

**EP 23 16 1326**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/052307 A1 (RANGASAMY EZHIYLMURUGAN [US] ET AL) 17 February 2022 (2022-02-17) * claims 1-20 * | 1-15 | INV. H01M4/04 ADD. H01M4/38 H01M4/587 H01M10/0525 |
| X | US 2021/126244 A1 (GAZDA JERZY [US] ET AL) 29 April 2021 (2021-04-29) * paragraph [0392] * | 1-15 | |
| X | CN 107 749 454 B (WANXIANG YIERSAN CO LTD; WANXIANG GROUP CO LTD) 16 October 2020 (2020-10-16) * claim 1 * | 1-15 | |
| X | CN 111 952 545 A (UNIV TONGJI) 17 November 2020 (2020-11-17) * claims 1,7 * | 1-15 | |
| X | US 2021/184199 A1 (HE MEINAN [US] ET AL) 17 June 2021 (2021-06-17) * claim 1 * | 1-15 | |
| X | CN 115 360 437 A (CHUNENG NEW ENERGY CO LTD) 18 November 2022 (2022-11-18) * claims 1-10 * | 1-15 | TECHNICAL FIELDS SEARCHED (IPC) H01M |

The present search report has been drawn up for all claims

| Place of search | Date of completion of the search | Examiner |
|---|---|---|
| Munich | 31 July 2023 | Haering, Christian |

EPO FORM 1503 03.82 (P04C01)

## ANNEX TO THE EUROPEAN SEARCH REPORT
## ON EUROPEAN PATENT APPLICATION NO.

EP 23 16 1326

This annex lists the patent family members relating to the patent documents cited in the above-mentioned European search report.
The members are as contained in the European Patent Office EDP file on
The European Patent Office is in no way liable for these particulars which are merely given for the purpose of information.

31-07-2023

| Patent document cited in search report | | Publication date | Patent family member(s) | | Publication date |
|---|---|---|---|---|---|
| US 2022052307 | A1 | 17-02-2022 | EP | 4197041 A1 | 21-06-2023 |
| | | | KR | 20230050403 A | 14-04-2023 |
| | | | TW | 202213840 A | 01-04-2022 |
| | | | US | 2022052307 A1 | 17-02-2022 |
| | | | WO | 2022035661 A1 | 17-02-2022 |
| US 2021126244 | A1 | 29-04-2021 | NONE | | |
| CN 107749454 | B | 16-10-2020 | NONE | | |
| CN 111952545 | A | 17-11-2020 | NONE | | |
| US 2021184199 | A1 | 17-06-2021 | CN | 112952184 A | 11-06-2021 |
| | | | DE | 102020131531 A1 | 17-06-2021 |
| | | | US | 2021184199 A1 | 17-06-2021 |
| CN 115360437 | A | 18-11-2022 | NONE | | |

EPO FORM P0459

For more details about this annex : see Official Journal of the European Patent Office, No. 12/82